# EUROPEAN PATENT APPLICATION

(11) **EP 4 393 683 A1**
(43) Date of publication of application: **03.07.2024**
(21) Application number: 23218514.0
(22) Date of filing: 20.12.2023
(51) Int. Cl.: B29C 65/04, B29K 27/06

(54) **MOVABLE HIGH FREQUENCY WELDING MACHINE**

(30) Priority: 23.12.2022 IT 202200026628
(71) Applicant: Ecomembrane SpA, 26030 Gadesco-Pieve Delmona (CR) (IT)
(72) Inventor: SPEDINI, Lorenzo, 26100 Cremona (CR) (IT)
(74) Representative: Mari, Marco Giovanni

(57) **Abstract**

The present invention is aimed at the industrial sector of the construction of gas storage systems, and more specifically it relates to a movable high frequency welding machine, particularly suitable for welding PVC-coated polyester fibre sheets, adapted to form membranes for storage gas containment and stabilization of pressostatic gasometers.

Said movable high frequency welding machine (1) comprises:
- a base frame (2);
- a pneumatic press (3) comprising a movable electrode (4) and a fixed counter electrode (5);
- movement means for said electrode (4);
- control means for activating said means for moving said electrode (4);
- a high-frequency generator (6) of the type comprising a thermionic valve, incorporated in the frame (2) of the welding machine (1) and operatively connected to said electrode (4) and counter electrode (5);
- a command and control unit (12),
- movement means (7, 8) for said welding machine (1);
- motor means for said movement means (7, 8);
- at least one hot air generator (9) placed in the vicinity of said pneumatic press (3) adapted to preheat said sheets and said counterelectrode (5), to let any condensation water evaporate before welding.

## Description

### Technical field of application

The present invention is aimed at the industrial sector of the construction of gas storage systems, and more specifically it relates to a movable high frequency welding machine, particularly suitable for welding PVC-coated polyester fibre sheets, adapted to form membranes for storage gas containment and stabilization of pressostatic gasometers.

### Background art

The current market needs for gas and biogas storage are aimed at the creation of membrane gasometers with ever-increasing storage volumes, to satisfy every need for storage and subsequent use of gas.

Creating gasometers with large storage volumes also means having to assemble containment membranes each having an enormous surface area, even over 5000 m² and consequently weighing more than 6 tonnes, using high frequency welding machines starting from web material wound in reels.

Current technologies are subject to limitations that do not allow the creation of membranes for gasometers of this size: moving these membranes during the welding steps with high frequency machines would require the simultaneous use of more than 50 workers, in addition to a covered processing surface exceeding 5000 m² without clutter and pillars. Furthermore, a sheet larger than 5000 m² could not even be loaded into a 40 foot container for shipping.

An alternative possibility could be to produce the sheets in the factory in pieces light enough to be workable without creating logistical or personnel problems, subsequently sending them to the construction site for the final welding of the prefabricated pieces on site.

This solution has a major limitation and drawback due to the fact that currently there are no high frequency welding machines capable of operating on outdoor civil construction sites. And high frequency welding is the only one that allows us to obtain joints with guaranteed and certifiable resistance to the forces to which the membrane in place will be subjected.

High frequency welding must take place in a clean place where there is low humidity and no condensation on the sheets. In the absence of these conditions, as may occur on an outdoor construction site for example, high frequency welding may create a voltage arc which may irreparably damage the PVC-coated polyester fibre fabric sheet.

Traditional high frequency welding machines used in factories include:
- a frame for support and resting on the ground;
- a press operated by a pressing piston comprising a movable electrode and a fixed counter electrode;
- movement means for said electrode;
- manual means for activating said movement means;
- a high frequency generator incorporated in the structure of the welding machine and operationally connected to said electrode and counter electrode;
- a command and control unit.

High frequency welding machines are based on a very rigid frame structure, which must be such to ensure that there are no variations in spatiality in the descent and ascent path of the welding bar, or of the electrode on the counter electrode. Even a small misalignment may generate points in which the electromagnetic field is discharged too quickly through the material to be welded with the consequent danger of burning the weld locally, or on the contrary the electromagnetic field is unable to transmit itself to the material, causing voids and welding discontinuities, thus compromising the mechanical strength of the finished membrane. Therefore, high frequency welding machines are normally installed on the floor in closed rooms, where the sheets are kept at a constant temperature, free of humidity and condensation, so as not to affect the welding.

Furthermore, the pneumatic press of fixed welding machines works with compressed air and therefore requires the use of a pressurization circuit present in the work room.

### Description of the invention

The object of the present invention is to eliminate the inconveniences and drawbacks described above by creating a movable high frequency welding machine, capable of operating on outdoor construction sites, ensuring precise welding without defects, in order to obtain directly on site a large finished sheet with uniform mechanical resistance, starting from web material wound in a reel, or from sheets pre-processed in the factory to be joined on site.

The objects are achieved with a movable high frequency welding machine adapted to weld PVC sheets comprising:
- a base frame;
- a pneumatic press comprising a movable electrode and a fixed counter electrode;
- movement means for said electrode;
- control means for activating said means for moving said electrode;
- a high-frequency generator of the type comprising a thermionic valve, incorporated in the frame of the welding machine and operatively connected to said electrode and counter electrode;
- a command and control unit,
characterized in that it further comprises:
- movement means for said welding machine;
- motor means for said movement means;
at least one hot air generator placed in the vicinity of said pneumatic press adapted to preheat said sheets and said counter-electrode, to let any condensation water evaporate before welding.

According to a first aspect of the invention, said hot air generator is placed upstream of said pneumatic press along the advancement direction of the welding machine.

Advantageously, said welding machine comprises fixing means for said hot air generator, and said fixing means comprise means for regulating the position of the hot air generator itself.

In particular, said hot air generator comprises a fan and an electric resistance.

According to further aspects of the invention, said means for moving said welding machine comprise at least a first pair of driving wheels and a second pair of idle wheels.

Alternatively, said means for moving said welding machine comprise motorized tracks.

In a particularly advantageous embodiment, said welding machine comprises a compressor, integrated in the base frame, connected to said movement means for said electrode.

Furthermore, said movement means for said electrode comprise a pneumatic piston powered by said compressor.

Advantageously, said high frequency generator comprises a housing for said thermionic valve. Furthermore, said housing comprises reversible connection means for said thermionic valve which is therefore removable.

The main advantage of the invention consists in having created a high frequency welding machine capable of operating outdoors, in humidity and temperature conditions typically unsuitable for welding, and moreover making it movable, so as to avoid the movement of the sheets during welding.

The subject welding machine is physically capable of advancing on loose earth in a civil construction site so as to allow welding not to take place by bringing the sheets closer to the welding machine placed in a fixed place (as happens with the prior art), but rather on the contrary, i.e. while the large sheets remain stationary on the ground, the welding machine moves autonomously to weld the sheets together, piece by piece.

The hot air generator placed on board the welding machine, upstream of the pneumatic electrode/counter electrode press, allows any water present on the sheets to evaporate before starting welding, so as to eliminate condensation from them and from the welding surface: the welding must in fact take place in a clean place where there is low humidity and no condensation on the sheets. If these conditions were not respected during welding, an electric arc would be created which would burn the PVC sheets.

Further advantages deriving from the preheating of the sheets and the counter electrode is the reduction in welding time, with consequent economic advantages. Furthermore, welding that takes place in a short time guarantees that there are no changes to the surrounding weather conditions that could compromise the success of the joint.

Advantageously, adhesion with high frequency welding allows, in ambient temperature conditions, to guarantee 80-90% of the tensile strength of the starting sheet; with hot air welding it would be impossible to reach these standards (a maximum of 50% of the tensile strength could be achieved).

High frequency welding restores the mechanical homogeneity of the welded sheet, with a guarantee of gas tightness, making the welded sheet completely waterproof.

The command and control unit is able to control numerous parameters, such as electrode frequency, welding temperature, cooling temperature, contact pressure, advancement speed of the welding machine on the ground: these are all conditions that can be automatically controlled by the welding machine, unlike what happens with hot air welding machines that work continuously.

Such controlled management allows you to perfectly regulate the welding even on uneven ground and along curved or shaped sheets.

Welding takes place efficiently, although the welding machine may be subject to multiple mechanical stresses due to transport: the possibility of installing the thermionic valve on site, by virtue of easy access to its housing, allows for separate transport of the same, in more protected conditions than the transport of the entire welding machine by van.

The subject movable high frequency welding machine allows you to create PVC sheets to cover pressure gasometers larger than 6 tons.

### Brief description of the drawings

These and other advantages will become apparent from the description of the invention, set out below with the aid of the drawings, which represent an embodiment example thereof, wherein:

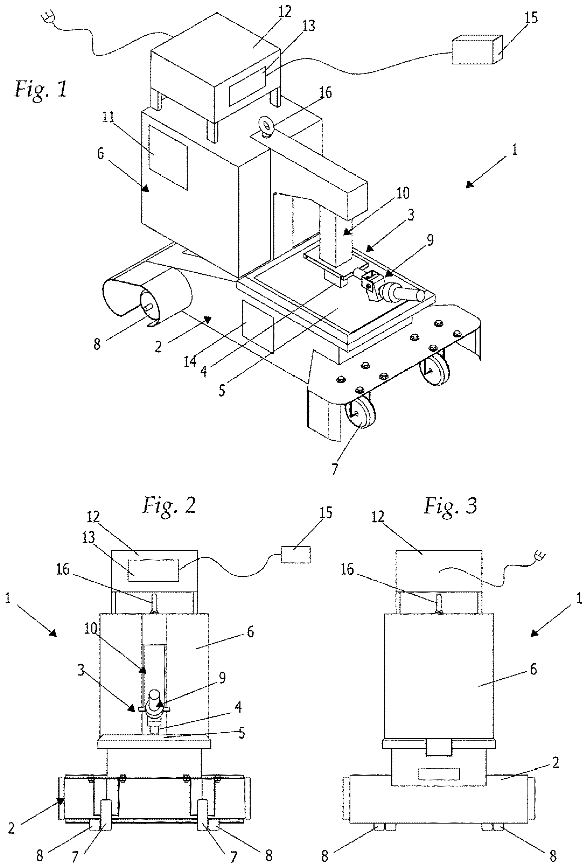

- Figure 1 illustrates, in an axonometric view, a movable high frequency welding machine according to the invention;

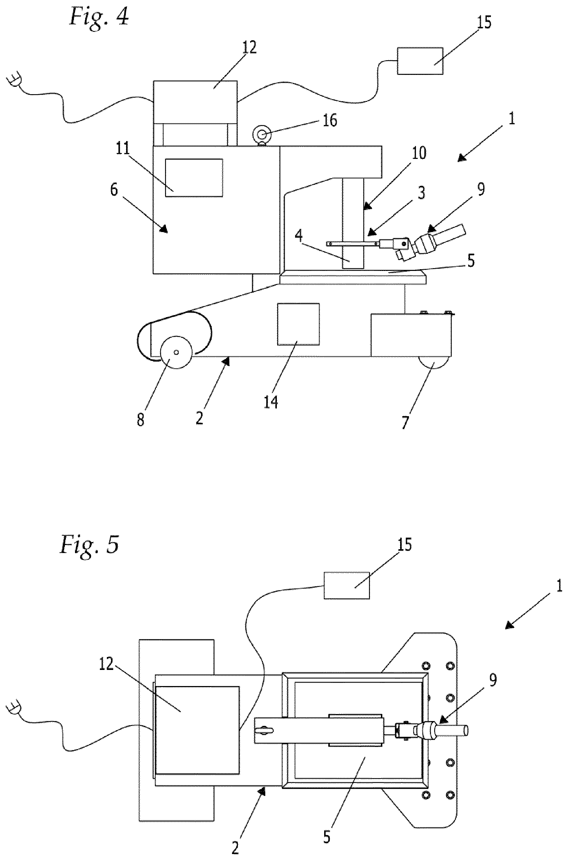

- Figures 2-5 illustrate, in front, rear, side and top views respectively, the welding machine of Fig. 1.

### Detailed description of a preferred embodiment of the invention

With reference to the Figures, a movable high frequency welding machine adapted to weld PVC sheets is shown.

Said welding machine 1 comprises:
- a base frame 2;
- a pneumatic press 3 comprising a movable electrode 4 and a fixed counter electrode 5;
- movement means for said electrode 4;
- control means for activating said means for moving said electrode 4;
- a high-frequency generator 6 of the type comprising a thermionic valve, incorporated in the frame 2 of the welding machine 1 and operatively connected to said electrode 4 and counter electrode 5;
- a command and control unit 12,
- movement means for said welding machine 1;
- motor means for said movement means;
- at least one hot air generator 9 placed in the vicinity of said pneumatic press 3 adapted to preheat said sheets and said electrode 4 and counter-electrode 5.

Said welding machine 1 comprises an electrical panel 13 powered by a three-phase electrical energy cable.

Said electrode 4 is small in size, for example 10 cm for a limited power of 3 kW, whereas said counter electrode 5 is shaped like a plate.

Said hot air generator 9 is placed in front of the welding machine 1, and is adapted to preheat the sheets, eliminating traces of humidity that may be present which could compromise the welding, as water is in fact a current conductor.

Said hot air generator 9 is placed upstream of said pneumatic press 3 along the advancement direction of the welding machine 1, and is associated with said frame 2 by means for regulating its position to appropriately direct the flow of hot air.

Said hot air generator 9 comprises a blowing fan and an electric resistance, and the temperature reached by the emitted air is 400 °C.

Excellent results were obtained using a hot air generator produced by the Leister Technologies AG company.

As mentioned above, said pneumatic press 3 requires that said counter electrode 5 remains fixed, underneath the sheets being welded, while said electrode 4 is movable, moving towards the sheets or away from them.

Said movement means for said electrode 4, and for said hot air generator 9 associated with it, comprise a pneumatic piston 10.

Said welding machine 1 comprises a compressor 14 integrated in the base frame 2, connected to said movement means for said electrode 4. The compressor 14 directly on board the welding machine 1 advantageously avoids having to bring a fixed compressor and a flexible pipe to the construction site, or to the welding site.

Said compressor 14 is powered by the same electrical panel 13 to which the welding machine 1 is connected, as is the hot air generator 9.

For its operation, said high frequency generator 3 comprises a thermionic valve (or triode), or a frequency emission valve. Since said valve is extremely delicate, especially if subject to vibrations such as those of road transport, it is necessary for said valve to be of the extractable type, and therefore removable.

For this purpose, said welding machine 1, in particular said high frequency generator 6, comprises a dedicated housing 11 for said valve easily accessible to the operator: during the movements of the welding machine 1 towards the processing site, the valve will travel separately, extracted from the welding machine 1 and in a dedicated protected case, while it will only be assembled on site during the welding work.

Said movement means of said welding machine 1 comprise a first pair of front driving wheels 7 and a second pair of pivoting idle rear wheels 8.

Said front driving wheels 7 are each provided with their own motor to facilitate steering of the welding machine 1 even on uneven terrain.

These motors are of the double speed type: one speed for small welding movements, and a higher speed for movements on the construction site, to or from the means of transport.

Said wheels 7, 8 are solid, with large diameter and high resistance tyres, adapted to work on loose ground, considering the fact that the working environments are mostly construction sites.

Said movement means of said welding machine therefore allow both the daily movement of the welding machine 1 to and from the van, and fine precision movements for the alignment of the welding machine 1 during the welding process along the two sheets to be joined.

Said movement means of said welding machine are managed by a wired control 15 that is easy to operate by the same operator assigned to welding. Said wired control 15 also performs the function of activating said means for moving the electrode 4.

In an alternative variant not illustrated, said means for moving said welding machine comprise motorized tracks for better weight distribution on uneven terrain.

Advantageously, said welding machine 1 may comprise an umbrella (not shown), fixed to the base frame, and adapted to protect, in addition to the pneumatic press and the hot air generator, also the PVC sheets from solar radiation, humidity or other bad weather.

Said welding machine advantageously comprises an eyebolt 16 for the extraordinary handling thereof with appropriate lifting means.

## Claims

1. Movable high frequency welding machine (1) adapted to weld PVC sheets comprising:
- a base frame (2);
- a pneumatic press (3) comprising a movable electrode (4) and a fixed counter electrode (5);
- movement means for said electrode (4);
- control means for activating said means for moving said electrode (4);
- a high-frequency generator (6) of the type comprising a thermionic valve, incorporated in the frame (2) of the welding machine (1) and operatively connected to said electrode (4) and counter electrode (5);
- a command and control unit (12),
**characterized in that** it further comprises:
- movement means (7, 8) for said welding machine (1);
- motor means for said movement means (7, 8);
- at least one hot air generator (9) placed in the vicinity of said pneumatic press (3) adapted to preheat said sheets and said counter-electrode (5), to let any condensation water evaporate before welding.

2. Movable high frequency welding machine (1) according to claim 1, **characterized in that** said hot air generator (9) is placed upstream of said pneumatic press (3) along the advancement direction of the welding machine (1).

3. Movable high frequency welding machine (1) according to claim 1, **characterized in that** it comprises fixing means for said hot air generator (9).

4. Movable high frequency welding machine (1) according to claim 3, **characterized in that** said fixing means comprise means for regulating the position of said hot air generator (9).

5. Movable high frequency welding machine (1) according to claim 1, **characterized in that** said hot air generator (9) comprises a fan and an electric resistance.

6. Movable high frequency welding machine (1) according to claim 1, **characterized in that** said movement means of said welding machine comprise at least a first pair of driving wheels (7) and a second pair of idle wheels (8).

7. Movable high frequency welding machine (1) according to claim 1, **characterized in that** said movement means of said welding machine comprise motorized tracks.

8. Movable high frequency welding machine (1) according to claim 1, **characterized in that** it comprises a compressor (14), integrated in the base frame (2), connected to said movement means for said electrode (4).

9. Movable high frequency welding machine according to claim 8, **characterized in that** said movement means for said electrode (4) comprise a pneumatic piston (10) powered by said compressor.

10. Movable high frequency welding machine (1) according to claim 1, **characterized in that** said high frequency generator (6) comprises a housing (11) for said thermionic valve.

11. Movable high frequency welding machine (1) according to claim 10, **characterized in that** said housing (11) comprises reversible connection means for said thermionic valve which is therefore removable.
